# EUROPÄISCHE PATENTSCHRIFT

(11) **EP 0 729 086 B1**
(45) Veröffentlichungstag und Bekanntmachung des Hinweises auf die Patenterteilung: **25.07.2001**
(21) Anmeldenummer: 96101858.7
(22) Anmeldetag: 09.02.1996
(51) Int. Cl.: G05D 23/19

(54) **Verfahren und Anordnung zur Regelung eines Niedertemperatur Heizsystems**
Method and device for controlling a low temperatue heating system
Procédé et dispositif pour réguler un système de chauffage par température basse

(30) Priorität: 25.02.1995 DE 19506628
(43) Veröffentlichungstag der Anmeldung: 28.08.1996
(73) Patentinhaber: TEKMAR ANGEWANDTE ELEKTRONIK GmbH, D-45257 Essen (DE)
(72) Erfinder: Latarius, Hans, D-45257 Essen (DE)
(74) Vertreter: Zenz, Joachim Klaus, Dipl.-Ing.

(56) Entgegenhaltungen:
- EP-A- 0 280 752
- EP-A- 0 308 806
- DE-A- 3 210 428
- DE-C- 2 846 753
- FR-A- 2 554 938
- GB-A- 2 136 989

## Beschreibung

Die Erfindung bezieht sich auf ein Verfahren zur Regelung eines Niedertemperatur-Heizsystems, bei dem ein Heizfluid von einer Übergabestelle aus auf mehrere Einzelraumstränge verteilt, in einem Rücklauf gesammelt und zur Übergabestelle zurückgeführt wird, wobei die Raumtemperaturen in den Räumen individuell eingestellt und überwacht und die Massenströme in den Einzelraumsträngen in Abhängigkeit von den Raumtemperaturen geregelt werden. Ferner bezieht sich die Erfindung auf eine Anordnung zur Durchführung dieses Verfahrens.

Die Entwicklung moderner Warmwasser-Niedertemperaturheizungen geht dahin, daß sowohl der Wärmeerzeuger geeignet geführt, als auch die Wärmezufuhr zu jedem einzelnen Raum individuell geregelt wird. Durch die individuelle Raumregelung werden Wärmegewinne des Raumes automatisch berücksichtigt und unterschiedliche Wärmeanforderungen nach individuellem Benutzerkomfort erfüllt.

Bei bekannten Verfahren der eingangs genannten Art wird der Wärmeerzeuger zumeist witterungsgeführt geregelt, während die Einzelraumregelung über thermostatisch oder hydraulisch betriebene Einzelventile erfolgt. Diese moderne Art der Niedertemperatur-Heizungsregelung hat gravierende Nachteile vor allem bei modernen Gebäuden mit hohem Wärmeschutz. In derartigen Gebäuden ist der Einfluß der Außentemperatur auf den Wärmebedarf der Räume im Vergleich zu raumcharakteristischen Einflußgrößen erheblich reduziert. Der Wärmebedarf in den einzelnen Räumen wird von der Sonneneinstrahlung, wärmeabgebenden Lichtquellen, Personenbelegung, etwaigen inneren Wärmequellen, z.B. Kaminen usw. maßgeblich beeinflußt. Eine herkömmliche individuelle Raumtemperaturregelung kann aufgrund von sekundären Wärmequellen den Massenstrom des Heizfluids stark drosseln, ohne daß eine Rückwirkung auf den witterungsgeführten Wärmeerzeuger stattfindet. Insofern führen die einzelnen individuellen Raumheizungsregelkreise ein regelungstechnisches "Eigenleben", von dem die witterungsgeführte Systemregelung nichts "weiß".

Ein weiteres bisher nur unbefriedigend gelöstes Problem liegt in der Voreinstellung der Einzelraumstränge zur Anpassung unterschiedlicher Rohrlängen und Strömungswiderstände. Zu diesem Zweck sind in bekannten Heizungsanordnungen zusätzliche Voreinstellungsventile am oder im Rücklaufverteiler angeordnet, die den maximalen Strömungsquerschnitt in dem zugehörigen Einzelraumstrang begrenzen. Die Voreinstellung erfolgt entsprechend den Planungsvorgaben entweder bereits herstellerseitig oder durch nachträglichen Eingriff des Installateurs. Die nachträgliche Abstimmung ist in der Praxis zumeist notwendig, um kurzfristige Dimensionierungsänderungen in der Länge einzelner Heizstränge zu berücksichtigen. Durch Verstellen eines oder mehrerer Rücklaufventile findet aber unvermeidlich eine Systemverstimmung statt, die selbst von einem erfahrenen Installateur nicht ohne weiteres korrigiert werden kann.

Der Erfindung liegt die Aufgabe zugrunde, die Regelung einer Niedertemperaturheizung zu verbessern, insbesondere anpassungsfähiger an die maßgeblichen Einflußgrößen zu machen.

Bei der Lösung dieser Aufgabe geht die Erfindung von der Überlegung aus, daß für die Optimierung der Raumtemperaturregelung von Niedertemperatur-Heizsystemen sowohl eine zuverlässige Adaption der Voreinstellungen in den Einzelraumsträngen als auch ein Informationsaustausch zwischen allen Einzelraumregelungen und der Steuerung des Wärmeerzeugers unverzichtbar sind.

Das eingangs genannte Verfahren zur Regelung eines Niedertemperatur-Heizsystems zeichnet sich erfindungsgemäß dadurch aus,
daß bei Inbetriebnahme des Heizsystems ein Inbetriebnahmeprogramm über ein zentrales Datenverarbeitungs- und Regelgerät abgewickelt wird, wobei die Kenndaten der Einzelraumstränge ermittelt und die maximalen Massenströme in den Einzelraumsträngen zum Systemabgleich individuell eingestellt werden;
daß in einer ersten Phase des Inbetriebnahmeprogramms die Kenndaten der Einzelraumstränge dadurch in erster Annäherung ermittelt werden, daß das Heizsystem über eine erste Zeitspanne mit hoher, insbesondere maximal zulässiger Systemleistung und bei ungedrosselten Einzelraumsträngen betrieben wird, die Regelantworten in den einzelnen Räumen erfaßt und danach ein erstes Einstellprofil für die maximalen Massenströme in den Einzelraumsträngen hergestellt wird;
daß sodann in wenigstens einer zweiten Phase des Inbetriebnahmeprogramms das Heizsystem über eine zweite Zeitspanne mit der hohen Systemleistung und unter Verwendung des ersten Einstellprofils in den Einzelraumsträngen betrieben wird, die Regelantworten in den einzelnen Räumen erfaßt und ein gegenüber dem ersten Einstellprofil korrigiertes zweites Einstellprofil der maximalen Massenströme hergestellt wird; und
daß das zuletzt erstellte Einstellprofil der maximalen Massenströme in den Einzelraumsträngen als Basis für die betriebliche Einzelraumregelung verwendet wird.

Dieses Verfahren hat zahlreiche Vorteile:

Die Voreinstellung und die gegenseitige Anpassung der Einzelraumregelkreise erfolgt vor Beginn der eigentlichen betrieblichen Heizungsregelung unter Berücksichtigung der Endauslegung des gesamten Heizsystems. Etwaige Auslegungsänderungen beim Endausbau des Heizungssystems werden berücksichtigt. Die Einzelraumregelungen können optimal aufeinander abgestimmt werden. Die kostenintensive Voreinstellung seitens des Systemherstellers einerseits und die Nachabstimmung seitens des Installationsunternehmens andererseits entfallen. Zusätzliche Voreinstellungsventile können entfallen; ihre Funktion kann vom Regelventil des Einzelraumstrangs übernommen werden. Die während des Intriebnahmeprogramms gewonnenen Informationen über das Einstellprofil der maximalen Massenströme und die Rückmeldungen der Raumtemperatur-Ist- und -Sollwerte schaffen zudem die Voraussetzung dafür, daß die Einzelraumregelungen die dominante Führungsgröße bei der Steuerung des Wärmeerzeugers bilden können. Das regelungstechnische "Eigenleben" der einzelnen Raumtempertur-Regelkreise wird daher aufgebrochen.

Der Systemabgleich kann in Weiterbildung der Erfindung dadurch verbessert werden, daß die zweite Phase des Inbetriebnahmeprogramms mindestens einmal analog wiederholt wird, wobei jeweils vom letzten Einstellprofil der maximalen Massenströme als Randparameter ausgegangen und ein korrigiertes neues Einstellprofil erstellt wird. Zur Kompensation von im praktischen Einsatz unvermeidbaren zunehmenden Toleranzen der thermomechanischen Bauteile kann das Inbetriebnahmeprogramm automatisch, gegebenfalls auch periodisch, wiederholt werden.

In bevorzugter Weiterbildung der Erfindung wird die Drehzahl einer das Heizfluid im System umwälzenden Pumpe in Abhängigkeit vom Fluiddruck oder Differenzdruck zwischen Vorlauf und Rücklauf geregelt. Eine Änderung der Druckdifferenz zwischen Vor- und Rücklauf gibt (durch Änderung der Positionen der Heizkreisventile) Aufschluß darüber, daß sich die Summe der Massenströme in den Einzelraumsträngen geändert hat. Der Vorlaufdruck bzw. die Druckdifferenz kann als Regelgröße für die Drehzahl einer das Heizfluid im System umwälzenden Pumpe verwendet werden. Ihre Regelung kann und wird in vielen Fällen vorzugsweise in Abhängigkeit vom gemessenen Druck oder der gemessenen Druckdifferenz Vor-/Rücklauf so vorgesehen, daß die Summe der Massenströme in den Heizkreisen konstant bleibt. Bei gleichbleibendem System-Massenstrom werden Geräusche reduziert, Komponenten und Material geschont und Energie gespart.

Vorzugsweise werden die Fluidtemperaturen im Heizsystem-Vor- und -Rücklauf gemessen. Bei laufender Erfassung des Differenzdrucks und der Differenztemperatur zwischen Vor- und Rücklauf können die momentanen Systemleistungen erfaßt und geregelt werden. Auch die Massenströme in den Einzelraumsträngen können nach dem aktuellen Einstellprofil in Verbindung mit den erfaßten aktuellen Leistungen berechnet werden.

In Weiterbildung der Erfindung ist vorgesehen, daß der System-Massenstrom im zentralen Datenverarbeitungs- und Regelgerät erfaßt und die Massenströme in den Einzelraumsträngen nach dem aktuellen Einstellprofil der Massenströme berechnet werden, daß die Massenströme in den Einzelraumsträngen durch einen Stellantrieb über ein Stellglied eingestellt und begrenzt werden, daß die Iststellung des Stellantriebs kontinuierlich oder diskontinuierlich zum zentralen Datenverarbeitungs- und Regelgerät übertragen wird und daß der Stellantrieb bei der betrieblichen Einzelraumregelung von einem Raumregler geregelt wird, wobei ein den eingestellten maximalen Massenstrom in dem zugehörigen Einzelraumstrang darstellendes Signal aus dem Datenverarbeitungs- und Regelgerät als Störgröße aufgeschaltet wird.

Die Erfindung sieht außerdem eine Anordnung zur Regelung eines Niedertemperatur-Heizsystems vor, die im Patentanspruch 7 definiert ist.

Diese Anordnung ist vorzugsweise dadurch weitergebildet, daß jedem Stellantrieb ein Positionsgeber zugeordnet: ist, der von dem zentralen Datenverarbeitungs- und Regelgerät abfragbar ist.

Die erfindungsgemäße Anordnung bietet den Vorteil, daß sie als gesamtes System montage- und baustellenfertig zum Einsatz bereitgestellt werden kann. Diese erfindungsgemäße Anordnung schafft in der Endausbaustufe die Voraussetzung dafür, daß die einzelnen Raumheizstränge beliebig genau aneinander angepaßt und aufeinander abgestimmt werden können, wobei nur ein einziges Regelventil pro Einzelraumstrang benötigt wird; und daß ferner eine laufende Kommunikation zwischen den Einzelraumregelungen und der zentralen Datenverarbeitung und Regelung stattfindet. Daher gelingt es, das Ergebnis aller Einzelraumregelungen als Führungsgröße für die Steuerung des Wärmeerzeugers heranzuziehen. Die Außentemperatur wird als Führungsgröße für die Leistungssteuerung des Wärmeerzeugers überflüssig; sie erweist sich aber zur Plausibilitätsprüfung und damit zur Überwachung der Systemregelung und der Funktionsweise der Regelungskomponenten als zweckmäßig.

Weitere vorteilhafte Einzelheiten der Erfindung sowie Weiterbildungen derselben sind in den Unteransprüchen gekennzeichnet.

Im folgenden wird die Erfindung anhand von in der Zeichnung dargestellten Ausführungsbeispielen näher erläutert. In der Zeichnung zeigen:
- Fig. 1: eine schematische Darstellung eines Ausführungsbeispiels einer Verteilerstation für eine Fußbodenheizung mit einem als Block gezeigten zentralen Datenverarbeitungs- und Regelgerät;
- Fig.2: ein Prinzipschaltbild einer Regelanordnung für einen Einzelraumstrang; und
- Fig. 3: eine mit den zentralen Datenverarbeitungs- und Regelgerät koppelbare Regelanordnung für einen Einzelraumstrang eines Heizsystems.

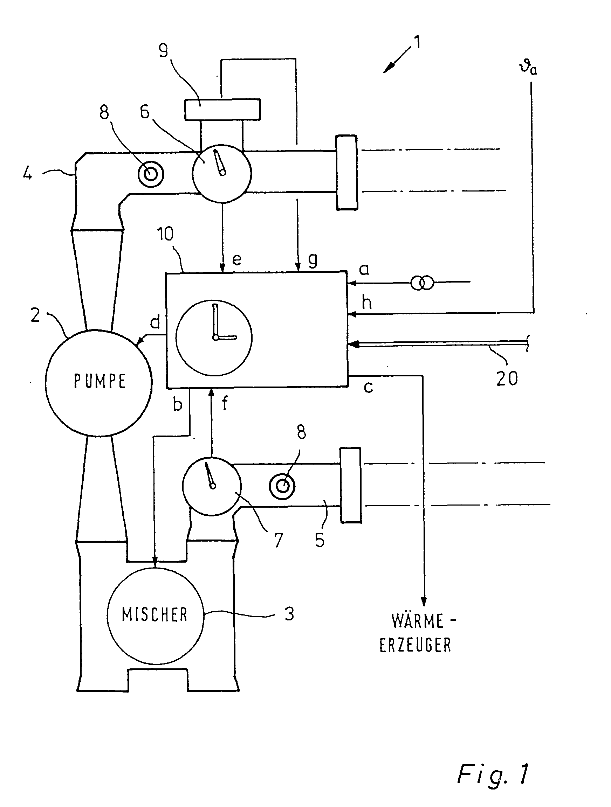

In Fig. 1 sind die wesentlichen Komponenten der Verteilerstation 1 des beschriebenen Niedertemperatur-Heizsystems schematisch dargestellt. Hierzu gehören eine drehzahlgeregelte Heizungsumwälzpumpe 2, ein Drei- oder Vier-Weg-Mischer 3, der die Übergabestelle zu einem in der Zeichnung nicht dargestellten Wärmeerzeuger bildet und der Heizwassertemperatur-Vorregelung dient. Mit den beiden hydraulischen Komponenten 2 und 3 sind zwei Anschlußstücke 4 und 5, die vorzugsweise aus Messing oder Rotguß bestehen, fest verbunden. Temperaturanzeigeinstrumente 6 und 7 sind zusammen mit elektronischen Sensoren über Tauchhülsen in den zum Vorlauf gehörigen Anschlußstutzen 4 bzw. den zum Rücklauf gehörigen Anschlußstutzen 5 eingeschoben. Außerdem sind im Vorlauf- und Rücklauf-Anschlußstück mit Stopfen 8 verschlossene Bohrungen angeordnet, die der optionalen Aufnahme zusätzlicher Sensoren dienen. Im Vorlauf ist zusätzlich ein Drucksensor, beispielsweise ein wartungsfreier Keramik-Drucksensor 9 angeordnet.

An die beiden Anschlußstücke 4 und 5 werden werkseitig oder auf der Baustelle ein Vor- und Rücklaufsammler angeschraubt. Derartige Vor- und Rücklaufsammler (in der Zeichnung nicht gezeigt) stehen in Einheiten zum Anschluß von drei, vier oder fünf Heizkreisen zur Verfügung, so daß die dargestellte Verteilerstation für jede beliebige Anzahl von Heizkreisen und deren beliebigen Ausbau verwendet werden kann. Der Vorlaufsammler kann montagefertig werkseitig vorgerüstet werden. Im Vorlaufverteiler sind Durchgangsventile für jeden Regelkreis bzw. jeden Einzelraumstrang angeordnet. Sie sind aus Platzersparnisgründen nicht auf dem Vorlaufsammler aufgebaut. Über geeignete Anschlüsse können am Vor- und Rücklaufsammler Absperrventile, Kugelhähne, Entlüfter etc. werkseitig oder vor Ort angeschraubt werden.

Ein zentrales Datenverarbeitungs- und Regelgerät 10, dessen zahlreiche Funktionen, Anschlüsse und Schnittstellen weiter unten beschrieben werden, ist der Verteilerstation 1 beigeordnet.

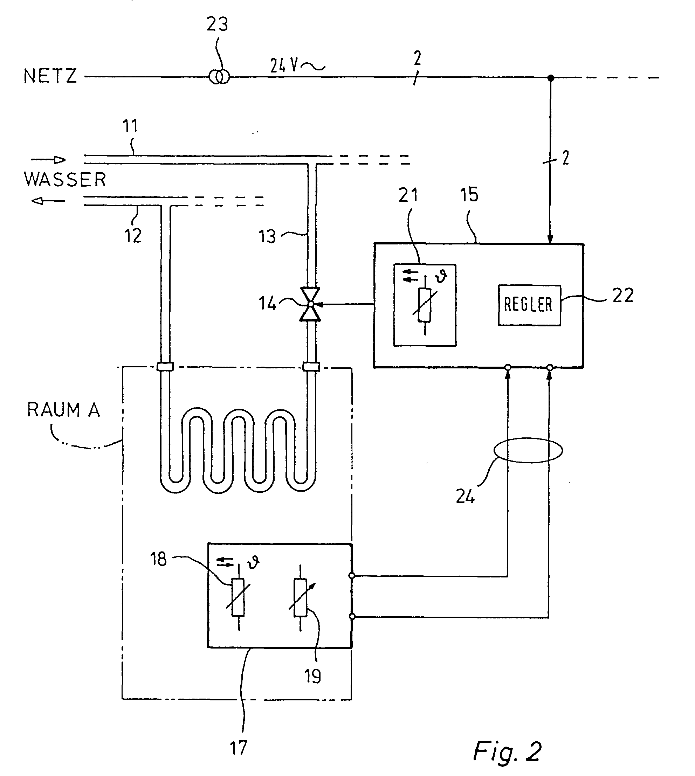

Fig. 2 zeigt die wesentlichen Komponten eines Regelkreises, der den Massenstrom in einem Einzelraumstrang 13 in Abhängigkeit von der Raumtemperatur regelt. Der dargestellte Einzelraumstrang 13 ist einer von mehreren geregelten Einzelraumsträngen, die parallel zueinander zwischen den als Leitungen 11 und 12 dargestellten Vorlauf- und Rücklaufverteilern angeordnet sind. Im Einzelraumstrang 13 ist ein Ventil 14 angeordnet, das den Massenstrom im Einzelraumstrang einstellt. Das Ventil 14 wird in dem beschriebenen Ausführungsbeispiel von einem besonderen thermischen Stellantrieb 15 in Abhängigkeit von einem Raumregler 17 gesteuert. Zu dem Raumregler 17 gehören ein Raumtemperaturfühler 18 und ein Sollwertsteller 19.

In dem Gehäuse des Stellantriebs 15 sind einerseits eine Steuerpatrone mit PTC-Element 21 und andererseits eine einen Regler enthaltende Leiterplatte 22 angeordnet. Sowohl der thermische Stellantrieb 15 als auch der Raumregler 17 werden aus einer Kleinspannungsquelle 23 über eine zweiadrige Leitung mit Strom versorgt.

Der Stellantriebsregler 22 wandelt die über die Zweidrahtleitung 24 vom Raumregler 17 einlaufenden Temperatur- und Sollwertinformationen aus dem Raum A in bedarfsgerechte Ausgangssignale zur Beheizung des PTC-Thermoantriebs 21 um. Dem Stellantriebsregler 22 ist außerdem ein nicht dargestellter handbetätigter Einsteller zugeordnet, mit dem die Position "Ventil auf" entsprechend dem maximal möglichen betrieblichen Massenstrom des Einzelstrangs vorgewählt werden kann.

Der anhand von Fig. 2 beschriebene elektronische Regelkreis zur Raumtemperaturregelung bietet gegenüber der thermostatischen Raumtemperaturregelung kaum regelungstechnische Vorteile; der Installationsaufwand wird jedoch deutlich herabgesetzt. Der Hauptvorteil der elektronischen Massenstromregelung gemäß Fig. 2 liegt aber in deren Kompatibilität mit einem zentralen Regelsystem und der Möglichkeit des bidirektionalen Datenaustauschs mit dem zentralen Datenverarbeitungs- und Regelgerät 10.

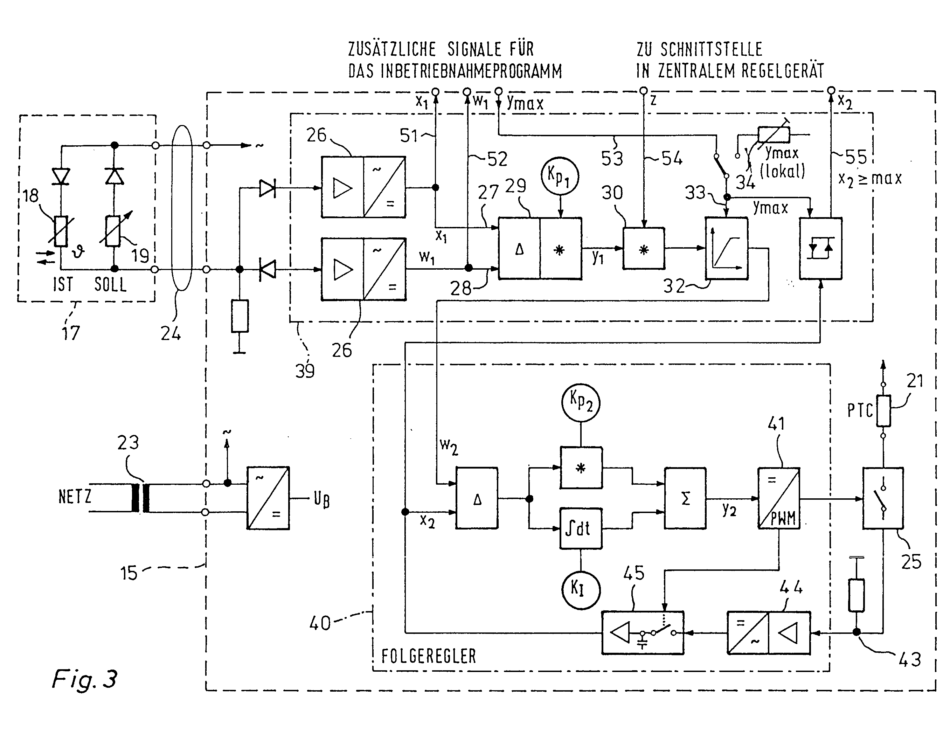

Ausbildung und überlegene Funktionen einer Einzelstrangregelung sowie deren Einbindung und Zusammenwirken mit dem zentralen Regelgerät 10 werden im folgenden anhand von Fig. 3 beschrieben.

In Fig. 3 sind der Raumregler 17 und der Stellantrieb 5 als gestrichelte Blöcke gezeigt. Die Raumtemperatur-Ist- und - Sollwerte werden über einen Halbleiterfühler 18 (z.B. NTC-Widerstand) und ein Potentiometer 19 als Sollwertsteller erfaßt. Zur Übertragung der Meßwerte einerseits und der Sollwerte andererseits dient die Zweidrahtleitung 24 der Wechselspannungsversorgung. Die Istwerte werden durch eine Halbwelle und die Sollwerte durch die andere Halbwelle übertragen. Diese Anordnung ist verpolungssicher. Die einlaufenden Halbwellensignale werden jeweils über nachgeschaltete Meßverstärker und Gleichrichter 26 zu einem Raumtemperatur-Istwert x₁ und einem Sollwert w₁ verarbeitet. Die Ausgangssignale x₁ und w₁ der beiden Meßverstärker 26 werden an die beiden Eingänge 27 und 28 einer Fehlersignale bildenden Differenzstufe 29 angelegt. Nach Verstärkung durch einen Verstärkungsfaktor Kp₁ wird aus dem Fehlersignal ein verstärktes Stellsignal y₁ gebildet. Diesem ersten Stellsignal y₁ kann in einem Block 30 ein vom zentralen Regelgerät gelieferter Störwert z eingeprägt werden. Dem Block 30 ist ein Funktionsverstärker 32 nachgeschaltet, der einer Stellgrößenbegrenzung dient. Zu diesem Zweck erhält der Funktionsverstärker über einen Stelleingang 33 ein Signal yₘₐₓ, das entweder während eines automatischen Inbetriebnahmeprogramms vom zentralen Regelgerät 10 geliefert wird oder über ein Potentiometer 34 von Hand eingegeben werden kann.

Am Ausgang des Funktionsverstärkers 32 erscheint ein korrigiertes Stellsignal, das als Führungsgröße w₂ an einen Folgeregler 40 angelegt wird. Der Folgeregler 40 steuert den thermischen Antrieb über den Heizwiderstand 21, der ein ausgeprägtes PTC-Verhalten hat. Der Folgeregler ist als PI-Regler ausgebildet, dessen Führungsgröße w₂ vom Ausgang des zuvor beschriebenen Führungsreglers 39 geliefert wird. Das Stellsignal y₂ des Folgereglers 40 wird von einem Pulsweitenmodulator 41 in ein zur Ansteuerung eines elektronischen Schalters 25 geeignetes (zerhacktes) Stellsignal umgesetzt. Durch Variation des PulsPausen-Verhältnisses wird der Stellantrieb über den Schalter 25 mit einer der Stellgröße y₂ proportional mittleren elektrischen Leistung beaufschlagt. Dabei ermöglicht die über den Stelleingang 33 und den Funktionverstärker 32 eingegebene Stellgrößenbegrenzung die Einstellung eines maximalen Öffnungsgrades des Ventils und damit dessen betrieblich nutzbaren Stellbereich.

Die aktuelle Ventilposition des Ventilantriebs ist proportional zur Temperatur der Steuerpatrone bzw. des PTC-Heizwiderstands 21. Das ausgeprägte PTC-Verhalten des PTC-Widerstands 21 ermöglicht dessen Istwertabfrage. Zu diesem Zweck wird die Spannung im Heizstromkreis an einer Stelle 43 abgetastet, über einen Meßverstärker mit nachgeschaltetem Gleichrichter 44 erfaßt und in einem nachgeschalteten Sample-and-Hold-Glied 45 eingefroren. Das S&H-Glied 45 wird von dem Pulsweitenmodulator 41 derart gesteuert, daß die Messung zu Beginn der Einschaltdauer, also unmittelbar auf eine Einschaltpause folgend, durchgeführt wird. Dieser Zeitpunkt kommt dem stationären Zustand am nächsten, da die gesamte Pausenzeit für einen Temperaturausgleich zwischen Heizwiderstand und Patrone zur Verfügung steht. Wenn die Einschaltdauer 100% beträgt, wird der Meßwert kontinuierlich erfaßt. Der am Ausgang des S&H-Gliedes zur Verfügung gestellte Meßwert stellt die aktuelle Ventilposition dar und wird als Regelgröße x₂ an den zweiten Eingang des Folgereglers angelegt.

Mit dem in Fig. 1 gezeigten zentralen Regelgerät 10 findet ein ständiger Informationsaustausch statt. Dies geschieht über eine in Fig. 1 mit 20 bezeichnete Signalleitungsanordnung. Jeder Raumregelkreis bzw. jede Leiterplatte 22 mit Regler steht bei dem beschriebenen Ausführungsbeispiel über insgesamt fünf Signalleitungen 51...55 mit dem zentralen Datenverarbeitungs- und Regelgerät 10 im Datenaustausch. Über die Leitungen 51 und 52 werden die Signale x₁ und w₁ entsprechend den Ist- und Sollwerten des Raumregelers 17 zum zentralen Regelgerät 10 übertragen. Auf der Leitung 53 stellt das zentrale Regelgerät 10 ein Signal yₘₐₓ zur Begrenzung der Stellgröße des Stellantriebs auf den maximalen Öffnungsgrad des zugehörigen Ventils zur Verfügung. Die Signalleitungen 51 bis 53 sind im Zuge des weiter unten beschriebenen Inbetriebnahmeprogramms aktiv.

Die Signalleitungen 54 und 55 sind während des normalen Regelbetriebs des Systems aktiv. Über die Signalleitung 54 schaltet das Zentralgerät ein Störsignal z auf, das durch einen geeigneten Algorithmus aus der zentral gemessenen Vorlauf-, Rücklauf- und Differenztemperatur sowie dem gewünschten Zeitprogramm (Nenn- oder Absenkbetrieb) und erforderlichenfalls dem gemessenen Außentemperaturwert gebildet wird.

Über die Signalleitung 55 meldet der Regelkreis dem Zentralgerät 10 mittels eines Binärsignals die Stellung "maximal zulässiger Öffnungsgrad" bzw. "maximal zulässiger Massenstrom" gemäß vorher gewonnenem Einstellprofil.

Der Zentralregler 10 verfügt über eine mit den Signalleitungen 51, 52 und 53 verbundene Schnittstelle für das Inbetriebnahmeprogramm sowie eine weitere Schnittstelle (Leitungen 54 und 55) für das normale Betriebsprogramm des Stellantriebs.

Wenn bei Inbetriebnahme der Heizungsanlage der in der Zeichnung nicht dargestellte Wahlschalter am zentralen Regelgerät 10 auf "Inbetriebnahmeprogramm" gestellt wird, werden alle Regelkreise (22 bzw. 39) auf voll geöffnetes Ventil am Vorlaufverteiler gestellt. Die Umwälzpumpe 2 arbeitet mit voller Drehzahl. Nach einer bestimmten Betriebsdauer stellen sich zunächst an denjenigen Raumtemperaturfühlern der zu einem System gehörigen Regelkreise Temperaturänderungen ein, die Räumen mit dem geringsten Rohrwiderstand oder großzügigster Rohrverlegung zugeordnet sind. Vom zentralen Datenverarbeitungs- und Regelgerät 10 können dann erste Zu-Signale an die entsprechenden Stellantriebe geschickt werden. Am Ende einer ersten Betriebsprogrammphase werden die maximalen Öffnungsgrade der einzelnen thermischen oder motorbetriebenen Stellantriebe nach dem Regelverhalten in der ersten Programmphase eingestellt, wodurch sich ein erstes Voreinstellprofil ergibt, das in erster Annäherung die relativen hydraulischen Verhältnisse in den zu einander parallel geschalteten Einzelraumsträngen berücksichtigt. Nach der Herstellung dieses ersten Einstellprofils ergeben sich wiederum andere Strömungsverhältnisse, die eine weitere Inbetriebnahmeprogrammphase in der Regel notwendig machen, um das System neu abzugleichen. In der zweiten Inbetriebnahmeprogrammphase wird das Heizsystem mit der hohen Systemleistung und unter Festhalten des ersten Einstellprofils in den Einzelraumsträngen betrieben. Nach den über die Signalleitungen 51 und 52 gewonnenen Regelantworten wird ein zweites Einstellprofil über die einzelnen yₘₐₓ-Leitungen 53 eingegeben, welches das erste Einstellprofil unter genauerem Systemabgleich korrigiert. Diese Korrekturen können mehrfach fortgesetzt werden, um einen optimalen Systemabgleich zu gewinnen. Das zuletzt erstellte Einstellprofil der maximalen Massenströme wird dann über die Leitung 53 und den Eingang 33 eingegeben und festgehalten für den folgenden Betrieb. Spätestens nach einer vorgebenen Anzahl von Inbetriebnahmeprogrammzyklen schaltet das zentrale Regelgerät 10 automatisch auf "Betrieb".

Während des normalen Betriebs arbeiten alle Ventile 14 im Gesamtsystem zwischen "geschlossen" und der individuell für jeden Einzelraumstrang unterschiedlichen Stellung "auf", wobei dieser maximale Öffnungsgrad bzw. maximale Massenstrom auf z.B. 50% reduziert sein kann. Ein manueller, hydraulischer Abgleich der Heizkreise wird daher entbehrlich. Entbehrlich ist auch ein gesondertes Voreinstellventil.

Das zentrale Regelgerät 10 veranlaßt nach vorgegebenen Zeitspannen im Aufheizbetrieb automatisch eine Wiederholung des Inbetriebnahmeprogramms (diese Wiederholung findet statt, ohne vom Verbraucher wahrgenommen zu werden). Dadurch werden mit zunehmender Betriebsdauer eventuell eintretende Toleranzen der thermomechanischen Komponenten kompensiert und neu abgeglichen.

Das Zentralgerät verfügt zusätzlich zu den beiden oben genannten und über die Leitungsanordnung 20 angekoppelten Schnittstellen über die folgenden Ein- und Ausgangklemmen:
a) Eingangnetzspannung,
b) PI-Ausgangmischer ,
c) P-Ausgang für Wärmeerzeuger,
d) stetiger Ausgang Umwälzpumpe,
e) Sensor-Eingang Vorlauftemperatur,
f) Sensor-Eingang Rücklauftemperatur,
g) Sensor-Eingang Wasserdruck,
h) Sensor-Eingang Außentemperatur.

Der PI-Ausgang b steuert den Mischer 3 abhängig von der Vor- und Rücklauftemperatur und den aufsummierten einzelnen Ventilstellungen unter besonderer Berücksichtigung eines voll geöffneten Ventils. In Abhängigkeit von dieser Bedingung wird auch der Wärmeerzeuger gesteuert. In Abhängigkeit von dem Vorlaufdruck - wahlweise auch vom Differenzdruck Vorlauf/Rücklauf - wird die Drehzahl der Umwälzpumpe geregelt. Der in Fig. 1 nur mit seinem Flansch dargestellte Silizium- oder Keramik-Drucksensor 9 erfaßt den Anlagendruck und gibt dem zentralen Regelgerät 10 das Signal für die Verstellung der Pumpendrehzahl.

Ein die Außentemperatur darstellendes Signal wird über den Reglereingang h eingegeben. Es kann als Störgröße in den Regelvorgang eingeführt werden. Diese Störgröße dient in dem beschriebenen Ausführungsbeispiel als Plausibilitätsvorgabe und kann gegebenenfalls zur Funktionseinschränkung bei Regelprozessen verwendet werden.

Neben den Einstellern und Bedienelementen für Wärmeerzeuger, Mischer 3 und Umwälzpumpe 2 sind der Verteilerstation 1 in der Regel noch Anzeigeeinrichtungen für diese Funktionen und eine Zeituhr zugeordnet, mittels der Nenn- und Absenkbetriebszeiten programmiert werden können.

Das zentrale Datenverarbeitungs- und Regelgerät 10 kann mit Fuzzy-Logic-Baugruppen zur Optimierung der Zeitsteuerung und der Regelparameter ausgestattet sein.

Außerdem kann das zentrale Datenverarbeitungs- und Regelgerät 10 mit weiteren Schnittstellen oder Steckplätzen zum späteren Anschluß einer Hausleittechnik ausgestattet sein.

## Patentansprüche

1. Verfahren zur Regelung eines Niedertemperatur-Heizsystems, bei dem das Heizfluid von einer Übergabestelle (3) aus auf mehrere Einzelraumstränge (13)verteilt, in einem Rücklauf (12) gesammelt und zur Übergabestelle zurückgeführt wird, wobei die Raumtemperaturen in den Räumen individuell eingestellt und überwacht und die Massenströme in den Einzelraumsträngen in Abhängigkeit von den Raumtemperaturen geregelt werden,
**dadurch gekennzeichnet,**
daß bei Inbetriebnahme des Heizsystems ein Inbetriebnahmeprogramm über ein zentrales Datenverarbeitungs- und Regelgerät (10) abgewickelt wird, wobei die Kenndaten der Einzelraumstränge ermittelt und die maximalen Massenströme in den Einzelraumsträngen zum Systemabgleich individuell eingestellt werden;
daß in einer ersten Phase des Inbetriebnahmeprogramms die Kenndaten der Einzelraumstränge (13) dadurch in erster Annäherung ermittelt werden, daß das Heizsystem über eine erste Zeitspanne mit hoher, insbesondere maximal zulässiger Systemleistung und bei ungedrosselten Einzelraumsträngen betrieben wird, die Regelantworten in den einzelnen Räumen erfaßt und danach ein erstes Einstellprofil für die maximalen Massenströme in den Einzelraumsträngen hergestellt wird;
daß sodann in wenigstens einer zweiten Phase des Inbetriebnahmeprogramms das Heizsystem über eine zweite Zeitspanne mit der hohen Systemleistung und unter Verwendung des ersten Einstellprofils in den Einzelraumsträngen betrieben wird, die Regelantworten in den einzelnen Räumen erfaßt und ein gegenüber dem ersten Einstellprofil korrigiertes zweites Einstellprofil der maximalen Massenströme hergestellt wird; und
daß das zuletzt erstellte Einstellprofil der maximalen Massenströme in den Einzelraumsträngen als Basis für die betriebliche Einzelraumregelung verwendet wird.

2. Verfahren nach Anspruch 1, dadurch gekennzeichnet, daß nach der zweiten Phase weitere Inbetriebnahmeprogrammphasen durchgeführt werden, in denen vom jeweils letzten Einstellprofil der maximalen Massenströme ausgegangen und ein korrigiertes neues Einstellprofil zur Verbesserung des Systemabgleichs erstellt wird.

3. Verfahren nach Anspruch 1 oder 2, dadurch gekennzeichnet, daß die Drehzahl einer das Heizfluid im System umwälzenden Pumpe (2) in Abhängigkeit von Fluiddruck oder dem Differenzdruck Vorlauf-Rücklauf geregelt wird.

4. Verfahren nach einem der Ansprüche 1 bis 3, dadurch gekennzeichnet, daß der System-Massenstrom im zentralen Datenverarbeitungs- und Regelgerät (10) erfaßt und die Massenströme in den Einzelraumsträngen (13) nach dem aktuellen Einstellprofil der Massenströme berechnet werden, daß die Massenströme in den Einzelraumsträngen durch einen Stellantrieb (13) über ein Stellglied (14) eingestellt und begrenzt werden, daß die Iststellung des Stellantriebs kontinuierlich oder diskontinuierlich zum zentralen Datenverarbeitungs- und Regelgerät übertragen werden und daß der Stellantrieb bei der betrieblichen Einzelraumregelung von einem Raumregler (22) geregelt wird, wobei ein den eingestellten maximalen Massenstrom in dem zugehörigen Einzelraumstrang darstellendes Signal aus dem Datenverarbeitungs- und Regelgerät als Störgröße aufgeschaltet wird.

5. Verfahren nach einem der Ansprüche 1 bis 4, dadurch gekennzeichnet, daß ein die Außentemperatur darstellendes Signal in dem zentralen Datenverarbeitungs- und Regelgerät (10) in Verbindung mit anderen Meßgrößen zur Plausibilitätsprüfung verwendet wird.

6. Verfahren nach einem der Ansprüche 1 bis 5, dadurch gekennzeichnet, daß die betriebliche Einzelraumregelung nach einer vorgegebenen Anzahl von Betriebsperioden unterbrochen und das Einstellprofil der maximalen Massenströme zum Systemabgleich neu erstellt wird, daß zur Erstellung des neuen Einstellprofils das Inbetriebnahmeprogramm mit der ersten und wenigstens einer zweiten Phase durchgeführt wird und daß das letzte betriebliche Einstellprofil der maximalen Massenströme als Korrekturbasis für das neue Einstellprofil verwendet wird.

7. Anordnung zur Regelung eines Niedertemperatur-Heizsystems, bei dem das Heizfluid von einer Übergabestelle (3) über einen Vorlauf (11) auf mehrere parallele Einzelraumstränge (13) verteilt, in einem Rücklauf (12) gesammelt und zur Übergabestelle zurückgeführt wird, wobei die Einzelraumstränge jeweils mit Stellgliedern (14) zur Steuerung der Massenströme versehen und die Stellglieder individuell über Stellantriebe (15) betätigbar sind, die jeweils mit einem Raumregler (17) zu einem individuell arbeitenden geschlossenen Regelkreis gekoppelt sind,
**dadurch gekennzeichnet,**
daß ein zentrales Datenverarbeitungs- und Regelgerät (10) mit dem Stellantrieb jedes der Regelkreise gekoppelt ist;
daß das zentrale Datenverarbeitungs- und Regelgerät (10) ein Inbetriebnahmeprogramm zur Ermittlung von Kenndaten der Einzelraumstränge und zur Einstellung der maximalen Massenströme in den einzelraumsträngen aufweist, wobei in einer ersten Phase des Inbetriebnahmeprogramms die Kenndaten der Einzelraumstränge dadurch in erster Annäherung ermittelt werden, daß das Heizsystem über eine erste Zeitspanne mit hoher, insbesondere maximal zulässiger Systemleistung und bei ungedrosselten Einzelraumsträngen betrieben wird, die Regelantworten in den einzelnen Räumen erfaßt und danach ein erstes Einstellprofil für die maximalen Massenströme in den Einzelraumsträngen hergestellt wird;
daß sodann in wenigstens einer zweiten Phase des Inbetriebnahmeprogramms das Heizsystem über eine zweite Zeitspanne mit der hohen Systemleistung und unter Verwendung des ersten Einstellprofils in den Einzelraumsträngen betrieben wird, die Regelantworten in den einzelnen Räumen erfaßt und ein gegenüber dem ersten Einstellprofil korrigiertes zweites Einstellprofil der maximalen Massenströme hergestellt wird; und
daß das zuletzt erstellte Einstellprofil der maximalen Massenströme in den Einzelraumsträngen als Basis für die betriebliche Einzelraumregelung verwendet wird.

8. Anordnung nach Anspruch 7, dadurch gekennzeichnet, daß jedem Stellantrieb (15) ein Positionsgeber (43, 44, 45) zugeordnet ist, der von dem zentralen Datenverarbeitungs- und Regelgerät (10) abfragbar ist (55).

9. Anordnung nach Anspruch 7 oder 8, dadurch gekennzeichnet, daß jeder Stellantrieb (15) einen Anschluß (54, 30) zum Anlegen eines Störsignals aufweist und daß der Störsignalanschluß jedes Stellantriebs mit dem zentralen Datenverarbeitungs- und Regelgerät (10) gekoppelt ist und daß die Stellantriebe (15) jeweils als thermische oder motorbetriebene Stellantriebe mit integriertem Regler (22) ausgebildet sind.

10. Anordnung nach einem der Ansprüche 7 bis 9, dadurch gekennzeichnet, daß im Vorlauf (11) des Heizsystems eine regelbare Umwälzpumpe (2) angeordnet ist, deren Drehzahl in Abhängigkeit vom Anlagendruck oder -differenzdruck regelbar ist.

11. Anordnung nach einem der Ansprüche 7 bis 10, dadurch gekennzeichnet, daß Temperatursonden (6, 7) zur Erfassung der Vorlauf- und Rücklauftemperaturen vorgesehen und mit dem zentralen Datenverarbeitungs- und Regelgerät (10) gekoppelt sind.

## Claims

1. Method of controlling a low temperature heating system in which the heating fluid is distributed from a transfer station (3) to a plurality of individual room lines (13), is collected in a return (12) and fed back to the transfer station, whereby the room temperatures in the rooms are individually adjusted and monitored and the mass flows in the individual room lines are controlled in dependence on the room temperatures, characterised in that on commencement of operation of the heating system a commencement program are performed by means of a central data processing and control device (10), whereby the characteristic data of the individual room lines is determined and the maximum mass flows in the individual room lines are individually adjusted to balance the system; that in a first phase of the commencement program the characteristic data of the individual room lines (13) are determined to a first approximation by operating the heating system for a first period of time with a high, preferably the maximum permissible, system output and with the individual room lines unthrottled, detecting the control responses in the individual rooms and thereafter producing a first adjustment profile for the maximum mass flows in the individual room lines; that in at least one second phase of the commencement program the heating system is then operated for a second period of time with the high system output whilst using the first adjustment profile in the individual room lines, the control responses in the individual rooms are detected and a second adjustment profile, corrected with respect to the first adjustment profile, of the maximum mass flows is produced; and that the last produced adjustment profile of the maximum mass flows in the individual room lines is used as the basis for the operational individual room control.

2. Method as claimed in Claim 1, characterised in that after the second phase further commencement program phases are performed in which the starting point in each case is the last adjustment profile of the maximum mass flows and a corrected new adjustment profile is produced for improving the system balance.

3. Method as claimed in Claim 1 or 2, characterised in that the speed of a pump (2) circulating the heating fluid in the system is controlled in dependence on the fluid pressure or the supply-return differential pressure,

4. Method as claimed in one of Claims 1 to 3, characterised in that the system mass flow is determined in the central data processing and control device (10) and the mass flows in the individual room lines (13) are calculated in accordance with the current adjustment profile of the mass flows, that the mass flows in the individual room lines are adjusted and limited by a control drive (13) via a control element (14), that the actual position of the control drive is transmitted continuously or discontinuously to the central data processing and control device and that the control drive is controlled in the operational individual room control by a room controller (22), whereby a signal from the data processing and control device representing the maximum set mass flow in the associated individual room line is superimposed as a disturbance variable.

5. Method as claimed in one of Claims 1 to 4, characterised in that a signal representing the outside temperature is used in the central data processing and control device (10) in conjunction with other measured values for plausibility testing.

6. Method as claimed in one of Claims 1 to 5, characterised in that the operational individual room control is interrupted after a predetermined number of operational periods and the adjustment profile of the maximum mass flows for system balance is produced anew, that to produce the new adjustment profile the commencement program is performed with the first and at least one second phase and that the last operational adjustment profile of the maximum mass flows is used as the correction basis for the new adjustment profile.

7. Arrangement for controlling a low temperature heating system, in which the heating fluid is distributed from a transfer station (3) via a supply (11) to a plurality of parallel individual room lines (13), is collected in a return (12) and is fed back to the transfer station, whereby the individual room lines are provided with respective adjustment elements (14) for controlling the mass flows and the control elements may be actuated individually by means of control drives (15), which are coupled to a respective room controller (17) to form an individually operating closed control circuit, characterised in that a central data processing and control device (10) is coupled to the control drive of each of the control circuits;
that the central data processing and control device (10) has a commencement program for determining characteristic data of the individual room lines and for adjusting the maximum mass flows in the individual room lines, whereby in a first phase of the commencement program the characteristic data of the individual room lines are determined to a first approximation by operating the heating system for a first period of time with a high, preferably the maximum permissible, system output and with the individual room lines unthrottled, detecting the control responses in the individual rooms and thereafter producing a first adjustment profile for the maximum mass flows in the individual room lines; that in at least one second phase of the commencement program the heating system is then operated for a second period of time with the high system output and whilst using the first adjustment profile in the individual room lines, the control responses in the individual rooms are detected and a second adjustment profile, corrected with respect to the first adjustment profile, of the maximum mass flows is produced; and that the last produced adjustment profile of the maximum mass flows in the individual room lines is used as the basis for the operational individual room control.

8. Arrangement as claimed in Claim 7, characterised in that associated with each control drive (15) there is a position detector (43, 44, 45), which may be interrogated (55) by the central data processing and control device (10).

9. Arrangement as claimed in Claim 7 or 8, characterised in that each control drive (15) has a connection (54, 30) for the application of a disturbance signal and that the disturbance signal connection of each control drive is coupled to the central data processing and control device (10) and that the control drives (15) are each constructed as thermal or motor-driven control drives with an integrated controller (22).

10. Arrangement as claimed in one of Claims 7 to 9, characterised in that disposed in the inlet (11) of the heating system there is a controllable circulating pump (2), the speed of which is controllable in dependence on the installation pressure or differential pressure.

11. Arrangement as claimed in one of Claims 7 to 10, characterised in that temperature probes (6, 7) for detecting the inlet and return temperatures are provided and are coupled to the central data processing and control device (10).

## Revendications

1. Procédé de régulation d'un système de chauffage à basse température dans lequel le fluide de chauffage est, d'un endroit de transfert (3), réparti entre plusieurs branches de pièces individuelles (13), rassemblé dans un retour (12) et ramené à l'endroit de transfert, les températures étant réglées et contrôlées individuellement dans les pièces et les débits-masse dans les branches de pièces individuelles étant régulés en fonction des températures dans les pièces,
caractérisé par le fait
qu'à la mise en marche du système de chauffage a lieu le déroulement d'un programme de mise en marche par un appareil central de traitement des données et de régulation (10), lors duquel les données caractéristiques des branches de pièces individuelles sont déterminées et les débits-masse maximaux dans les branches de pièces individuelles sont réglés individuellement pour l'équilibrage du système,
que dans une première phase du programme de mise en marche, on détermine les données caractéristiques des branches de pièces individuelles (13) en première approximation en faisant fonctionner le système de chauffage pendant une première période à puissance élevée, en particulier maximale admissible, et avec branches de pièces individuelles non réduites, saisit les réponses de régulation dans les pièces individuelles et établit d'après cela un premier profil de réglage des débits-masse maximaux dans les branches de pièces individuelles,
qu'ensuite, dans au moins une deuxième phase du programme de mise en marche, on fait fonctionner le système de chauffage pendant une deuxième période à sa puissance élevée et avec utilisation du premier profil de réglage dans les branches de pièces individuelles, saisit les réponses de régulation dans les pièces individuelles et établit un deuxième profil de réglage des débits-masse maximaux corrigé par rapport au premier profil de réglage, et
qu'on utilise le profil de réglage des débits-masse maximaux dans les branches de pièces individuelles établi en dernier comme base pour la régulation de marche des pièces individuelles.

2. Procédé selon la revendication 1, caractérisé par le fait qu'après la deuxième phase, on exécute d'autres phases de programme de mise en marche dans lesquelles on part du dernier profil de réglage des débits-masse maximaux et établit un nouveau profil de réglage corrigé pour améliorer l'équilibrage du système.

3. Procédé selon l'une des revendications 1 et 2, caractérisé par le fait qu'on règle la vitesse de rotation d'une pompe (2) qui fait circuler le fluide de chauffage dans le système en fonction de la pression de ce fluide ou de la différence de pression entre l'aller et le retour.

4. Procédé selon l'une des revendications 1 à 3, caractérisé par le fait que le débit-masse du système est saisi dans l'appareil central de traitement des données et de régulation (10) et les débits-masse dans les branches de pièces individuelles (13) sont calculés d'après le profil actuel de réglage des débits-masse, que les débits-masse dans les branches de pièces individuelles sont réglés et limités par un actionneur (15) par l'intermédiaire d'un élément de réglage final (14), que la position effective de l'actionneur est transmise de façon continue ou discontinue à l'appareil central de traitement des données et de régulation, et que pendant la régulation de marche des pièces individuelles, l'actionneur est réglé par un régulateur de pièce (22), un signal représentant le débit-masse maximal réglé dans la branche de pièce individuelle afférente étant introduit de l'appareil de traitement des données et de régulation comme perturbation.

5. Procédé selon l'une des revendications 1 à 4, caractérisé par le fait qu'un signal représentant la température extérieure est utilisé dans l'appareil central de traitement des données et de régulation (10) en association avec d'autres grandeurs mesurées pour le contrôle de vraisemblance.

6. Procédé selon l'une des revendications 1 à 5, caractérisé par le fait que la régulation de marche des pièces individuelles est interrompue après un nombre fixé de périodes de fonctionnement et le profil de réglage des débits-masse maximaux est de nouveau établi pour l'équilibrage du système, que pour l'établissement du nouveau profil de réglage, le programme de mise en marche est exécuté avec la première et au moins une deuxième phase, et que le dernier profil de réglage de marche des débits-masse maximaux est utilisé comme base de correction pour le nouveau profil de réglage.

7. Dispositif de régulation d'un système de chauffage à basse température dans lequel le fluide de chauffage est, d'un endroit de transfert (3), réparti par un aller (11) entre plusieurs branches parallèles de pièces individuelles (13), rassemblé dans un retour (12) et ramené à l'endroit de transfert, les branches de pièces individuelles étant pourvues d'éléments de réglage finals (14) pour la commande des débits-masse, et les éléments de réglage finals pouvant être actionnés individuellement par l'intermédiaire d'actionneurs (15) qui sont couplés chacun à un régulateur de pièce (17) en une boucle de régulation fonctionnant individuellement,
caractérisé par le fait
qu'un appareil central de traitement des données et de régulation (10) est couplé à l'actionneur de chacune des boucles de régulation,
que l'appareil central de traitement des données et de régulation (10) présente un programme de mise en marche pour la détermination de données caractéristiques des branches de pièces individuelles et pour le réglage des débits-masse maximaux dans les branches de pièces individuelles, et dans une première phase du programme de mise en marche, on détermine les données caractéristiques des branches de pièces individuelles en première approximation en faisant fonctionner le système de chauffage pendant une première période à puissance élevée, en particulier maximale admissible, et avec branches de pièces individuelles non réduites, saisissant les réponses de régulation dans les pièces individuelles et établissant d'après cela un premier profil de réglage des débits-masse maximaux dans les branches de pièces individuelles,
qu'ensuite, dans au moins une deuxième phase du programme de mise en marche, on fait fonctionner le système de chauffage pendant une deuxième période à sa puissance élevée et en utilisant le premier profil de réglage dans les branches de pièces individuelles, saisit les réponses de régulation dans les pièces individuelles et établit un deuxième profil de réglage des débits-masse maximaux corrigé par rapport au premier profil de réglage, et
qu'on utilise le profil de réglage établi en dernier des débits-masse maximaux dans les branches de pièces individuelles comme base pour la régulation de marche des pièces individuelles.

8. Dispositif selon la revendication 7, caractérisé par le fait qu'à chaque actionneur (15) est associé un émetteur de position (43, 44, 45) qui peut être interrogé (55) par l'appareil central de traitement des données et de régulation (10).

9. Dispositif selon l'une des revendications 7 et 8, caractérisé par le fait que chaque actionneur (15) présente une connexion (54, 30) pour l'application d'un signal perturbateur et que la connexion de signal perturbateur de chaque actionneur est couplée à l'appareil central de traitement des données et de régulation (10), et que les actionneurs (15) sont des actionneurs thermiques ou commandés par moteur avec régulateur intégré (22).

10. Dispositif selon l'une des revendications 7 à 9, caractérisé par le fait que dans l'aller (11) du système de chauffage est montée une pompe réglable de circulation (2) dont la vitesse de rotation peut être réglée en fonction de la pression ou la pression différentielle de l'installation.

11. Dispositif selon l'une des revendications 7 à 10, caractérisé par le fait que des sondes de température (6, 7) sont prévues pour la saisie des températures d'aller et de retour et couplées à l'appareil central de traitement des données et de régulation (10).□
